# EUROPÄISCHE PATENTSCHRIFT

(11) **EP 2 188 822 B1**
(45) Veröffentlichungstag und Bekanntmachung des Hinweises auf die Patenterteilung: **23.03.2016**
(21) Anmeldenummer: 08803715.5
(22) Anmeldetag: 05.09.2008
(51) Int. Cl.: H01H 33/16

(54) **HOCHSPANNUNGSLEISTUNGSSCHALTER MIT EINEM SCHALTER ZUM ZUSCHALTEN EINES EINSCHALTWIDERSTANDES**
HIGH VOLTAGE CIRCUIT BREAKER WITH A SWITCH FOR CONNECTING A CLOSING RESISTOR
DISJONCTEUR HAUTE-TENSION AVEC UN COMMUTATEUR POUR CONNECTER UNE RÉSISTANCE DE FERMETURE

(30) Priorität: 10.09.2007 EP 07116040
(43) Veröffentlichungstag der Anmeldung: 26.05.2010
(73) Patentinhaber: ABB Technology AG, 8050 Zürich (CH)
(72) Erfinder: HOLAUS, Walter, CH-8047 Zürich (CH); SOLOGUREN-SANCHEZ, Diego, CH-5430 Wettingen (CH); WILLI, Thomas-Juerg, CH-8050 Zürich (CH); KRUESI, Urs, CH-8046 Zürich (CH); KOTILAINEN, Sami, CH-5443 Niederrohrdorf (CH); HOLSTEIN, Martin, SE-216 14 Limhamn (SE); ARYA, Anupam, Vadodara 390 015 (IN); CHAUHAN, Kalpesh, Vadodara Gujarat 390 013 (IN); GARCIA, Miguel, CH-8600 Dübendorf (CH); KELLER, Markus, CH-8052 Zürich (CH)
(74) Vertreter: ABB Patent Attorneys
(86) Internationale Anmeldenummer: PCT/EP2008/061745
(87) Internationale Veröffentlichungsnummer: WO 2009/034022

(56) Entgegenhaltungen:
- CH-A5- 660 645
- DE-A1- 1 590 985
- GB-A- 2 117 975
- US-A- 3 538 276
- US-A- 4 095 069

## Beschreibung

### Technisches Gebiet

Die Erfindung betrifft einen Hochspannungsleistungsschalter gemäss dem Oberbegriff des Anspruchs 1.

### Stand der Technik

Ein derartiger Hochspannungsleistungsschalter ist aus der Offenlegungsschrift US 4,499,350 bekannt. Dieser bekannte Hochspannungsleistungsschalter weist einen Hauptstrompfad auf, der mittels einer Unterbrechereinheit trennbar ist. Parallel zum Hauptstrompfad ist ein Nebenstrompfad geführt, in welchem ein Schalter und ein Einschaltwiderstand in Serie zueinander geschaltet sind. Der Einschaltwiderstand wird kurz vor dem Schliessen der Kontaktanordnung der Unterbrechereinheit in den Stromkreis eingeschaltet, derart, dass der Strom kurz vor dem Schliessen des Hauptstrompfades durch den Nebenstrompfad mit dem Einschaltwiderstand fliesst. Folglich erfolgt das Einfügen des Einschaltwiderstandes in den Stromkreis unter Last. Ein beweglicher Unterbrecherkontakt der Unterbrechereinheit ist über Hebel und Winkelelemente von einer Antriebseinheit angetrieben. Ebenso ist ein angetriebener Kontakt des Schalters von derselben Antriebseinheit angetrieben. Der angetriebene Kontakt des Schalters wirkt mit einem ebenfalls beweglichen Gegenkontakt des Schalters zusammen, der mittels einer Feder in Richtung des Kontakts vorgespannt ist. Beim Schliessen des Hochspannungsleistungsschalters schliesst der Schalter vor der Unterbrechereinheit. Nach dem Schliessen des Schalters schliesst die Unterbrechereinheit, sodass der Nebenstrompfad über den Hauptstrompfad überbrückt wird. Beim Öffnen des Hochspannungsleistungsschalters öffnet der Schalter vor der Unterbrechereinheit, sodass die Unterbrechung des Stroms mittels der Unterbrechereinheit erfolgt. Dies wird dadurch erreicht, dass der angetriebene Kontakt sich mit einer grösseren Geschwindigkeit bewegt, als der Gegenkontakt, auf welchen die Kraft der Feder einwirkt.

Nachteilig am bekannten Hochspannungsleistungsschalter erweist sich, dass eine aufwendige, aus vielen Einzelteile bestehende Mechanik nötig ist, um die Unterbrechereinheit und den Schalter zu betätigen. Weiter erweist es sich als nachteilig, dass beim Öffnen des Hochspannungsleistungsschalters die Feder des Schalters den Zeitpunkt bestimmt, zu welchem dieser Öffnet.

Ein weiterer gasisolierter, gekapselter Hochspannungsleistungsschalter ist aus US 2 117 975 A bekannt. Dieser bekannte Hochspannungsleistungsschalter weist eine Unterbrechereinheit auf. Parallel zu dieser Unterbrechereinheit ist ein Schalter und ein Einschaltwiderstand angeordnet, wobei der Schalter seriell zum Einschaltwiderstand geschaltet ist. Ein Kontakt des Schalters zum Einschalten des Einschaltwiderstandes wird entlang einer Achse bewegt.

Weitere Hochspannungsschalter sind aus US 3 538 276 und US 4 095 069 bekannt.

### Darstellung der Erfindung

Aufgabe der Erfindung ist es einen gasisolierten Hochspannungsleistungsschalter zu Schaffen, dessen Mechanik zum Öffnen und Schliessen der Unterbrechereinheit und des Schalters möglichst einfach ausgebildet ist und zuverlässig funktioniert.

Diese Aufgabe wird durch den Hochspannungsleistungsschalter mit den Merkmalen des Anspruchs 1 gelöst.

Erfindungsgemäss weist der Hochspannungsleistungsschalter eine Unterbrechereinheit, einen Einschaltwiderstand und einen in Serie zum Einschaltwiderstand geschalteten Schalter auf. Die Unterbrechereinheit weist einen beweglichen, angetriebenen ersten Unterbrecherkontakt auf, der zum Öffnen und Schliessen des Hochspannungsleistungsschalters mit einem zweiten Unterbrecherkontakt zusammen wirkt. Der in Serie zum Einschaltwiderstand geschaltete Schalter weist einen beweglichen Schaltkontakt auf, dessen Bewegung mittels eines Getriebes an die Bewegung des ersten Unterbrecherkontakts mechanisch gekoppelt ist. Der Schaltkontakt ist derart beweglich ausgebildet, dass der Schaltkontakt zum Einfügen des Einschaltwiderstandes um eine Drehachse drehbar ist.

Gemäss einer bevorzugen Ausführungsform weist der gasisolierte, metallgekapselte Hochspannungsleistungsschalter eine Unterbrechereinheit, einen Einschaltwiderstand und einen in Serie zum Einschaltwiderstand geschalteten Schalter zum Einfügen des Einschaltwiderstandes in den Stromkreis unter Last auf. Dabei weist die Unterbrecher-einheit einen beweglichen, angetriebenen ersten Unterbrecherkontakt auf, der zum Öffnen und Schliessen des Hochspannungsleistungsschalters mit einem zweiten Unterbrecherkontakt zusammen wirkt. Dabei weist der Schalter einen beweglichen Schaltkontakt auf, dessen Bewegung mittels eines Getriebes an die Bewegung des ersten Unterbrecherkontakts mechanisch gekoppelt ist. Der Schaltkontakt ist zum Einfügen des Einschaltwiderstandes um eine Drehachse drehbar angeordnet. Die mechanische Kopplung des Schaltkontaktes an die diesen Schaltkontakt antreibende Bewegung erfolgt lediglich während einer Zeitspanne während des Schliessens der Unterbrechereinheit. Diese Zeitspanne ist kürzer gewählt als die Dauer der Bewegung zum Schliessen der Unterbrechereinheit. Diese Art der Kopplung ermöglicht, dass der Bewegungsablauf des Schaltkontaktes optimal gewählt werden kann. Insbesondere ermöglicht dies eine nahezu beliebige Steuerung der Zeitpunkte, zu welchen der Schalter schliesst und wieder öffnet während des Schliessens der Unterbrechereinheit.

Gemäss einer bevorzugen Ausführungsform weist der gasisolierte, metallgekapselte Hochspannungsleistungsschalter eine Unterbrechereinheit, einen Einschaltwiderstand und einen in Serie zum Einschaltwiderstand geschalteten Schalter zum Einfügen des Einschaltwiderstandes in den Stromkreis unter Last auf. Dabei weist die Unterbrecher-einheit einen beweglichen, angetriebenen ersten Unterbrecherkontakt auf, der zum Öffnen und Schliessen des Hochspannungsleistungsschalters mit einem zweiten Unterbrecherkontakt zusammen wirkt. Dabei weist der Schalter einen beweglichen Schaltkontakt auf, dessen Bewegung mittels eines Getriebes an die Bewegung des ersten Unterbrecherkontakts mechanisch gekoppelt ist. Der Schaltkontakt ist zum Einfügen des Einschaltwiderstandes um eine Drehachse drehbar angeordnet. Dabei ist das Getriebe durch ein Kurvengetriebe, insbesondere durch eine Kulissensteuerung ausgebildet. Durch das Kurvengetriebe beziehungsweise durch die Kulissensteuerung wird eine sehr kompakte Bauweise des Schalters ermöglicht. Weiter ermöglicht das Kurvengetriebe beziehungsweise die Kulissensteuerung, dass nur sehr wenige, zueinander bewegliche Elemente benötigt werden. Insbesondere kann der mit einer grossen Geschwindigkeit bewegliche Schaltkontakt aus einem leichten Material gefertigt werden. Folglich kann die Mechanik zum Antreiben des Schaltkontakts wie auch des ersten Unterbrecherkontakts an die verhältnismässig kleinen Kräfte angepasst werden, wodurch eine insgesamt leichte Bauweise der gesamten Mechanik ermöglicht wird. Folglich kann ebenso der Antrieb kleiner ausgelegt werden. Weiter erlaubt das Kurvengetriebe beziehungsweise die Kulissensteuerung eine nahezu beliebige Übersetzung der linearen Bewegung des ersten Unterbrecherkontakts in die Drehbewegung des Unterbrecherkontakts. Weiter ermöglicht das Kurvengetriebe eine nahezu beliebige Steuerung der Zeitpunkte, zu welchen der Schalter schliesst und wieder öffnet während des Schliessens der Unterbrechereinheit.

Gemäss einer bevorzugten Ausführungsform weist der gasisolierte, metallgekapselte Hochspannungsleistungsschalter eine Unterbrechereinheit, einen Einschaltwiderstand und einen in Serie zum Einschaltwiderstand geschalteten Schalter zum Einfügen des Einschaltwiderstandes in den Stromkreis unter Last auf. Dabei weist die Unterbrechereinheit einen beweglichen, angetriebenen ersten Unterbrecherkontakt auf, der zum Öffnen und Schliessen des Hochspannungsleistungsschalters mit einem zweiten Unterbrecherkontakt zusammen wirkt. Dabei weist der Schalter einen beweglichen Schaltkontakt auf, dessen Bewegung mittels eines Getriebes an die Bewegung des ersten Unterbrecherkontakts mechanisch gekoppelt ist. Der Schaltkontakt ist zum Einfügen des Einschaltwiderstandes um eine Drehachse drehbar angeordnet. Der Hauptstrompfad des Hochspannungsleistungsschalters ist mittels der Unterbrechereinheit unterbrechbar. Der die Unterbrechereinheit aufweisende Hauptstrompfad ist parallel zu einem Nebenstrompfad angeordnet, in welchem der Schalter und der Einschaltwiderstand in Serie zueinander geschaltet sind. Dies ermöglicht es, dass der Einschaltwiderstand nach dem Schliessen der Unterbrechereinheit komplett aus dem Stromkreis heraus getrennt wird, wodurch keine ohmschen Verluste im Einschaltwiderstand auftreten.

Gemäss einer bevorzugten Ausführungsform weist der gasisolierte, metallgekapselte Hochspannungsleistungsschalter eine Unterbrechereinheit, einen Einschaltwiderstand und einen in Serie zum Einschaltwiderstand geschalteten Schalter zum Einfügen des Einschaltwiderstandes in den Stromkreis unter Last auf. Dabei weist die Unterbrechereinheit einen beweglichen, angetriebenen ersten Unterbrecherkontakt auf, der zum Öffnen und Schliessen des Hochspannungsleistungsschalters mit einem zweiten Unterbrecherkontakt zusammen wirkt. Dabei weist der Schalter einen beweglichen Schaltkontakt auf, dessen Bewegung mittels eines Getriebes an die Bewegung des ersten Unterbrecherkontakts mechanisch gekoppelt ist. Der Schaltkontakt ist zum Einfügen des Einschaltwiderstandes um eine Drehachse drehbar angeordnet. Dabei steht die Drehachse des Schaltkontakts rechtwinklig zur Achse. Dadurch wird eine besonders einfache Bauweise des Hochspannungsleistungsschalters ermöglicht.

Gemäss einer bevorzugten Ausführungsform weist der gasisolierte, metallgekapselte Hochspannungsleistungsschalter eine Unterbrechereinheit, einen Einschaltwiderstand und einen in Serie zum Einschaltwiderstand geschalteten Schalter zum Einfügen des Einschaltwiderstandes in den Stromkreis unter Last auf. Dabei weist die Unterbrechereinheit einen beweglichen, angetriebenen ersten Unterbrecherkontakt auf, der zum Öffnen und Schliessen des Hochspannungsleistungsschalters mit einem zweiten Unterbrecherkontakt zusammen wirkt. Dabei weist der Schalter einen beweglichen Schaltkontakt auf, dessen Bewegung mittels eines Getriebes an die Bewegung des ersten Unterbrecherkontakts mechanisch gekoppelt ist. Der Schaltkontakt ist zum Einfügen des Einschaltwiderstandes um eine Drehachse drehbar angeordnet. Die Kulissensteuerung ist im selben Gasraum angeordnet wie der Schalter und/oder die Unterbrechereinheit. Dies erlaubt eine kompakte, einfache Bauweise.

Gemäss einer bevorzugten Ausführungsform weist der gasisolierte, metallgekapselte Hochspannungsleistungsschalter eine Unterbrechereinheit, einen Einschaltwiderstand und einen in Serie zum Einschaltwiderstand geschalteten Schalter zum Einfügen des Einschaltwiderstandes in den Stromkreis unter Last auf. Dabei weist die Unterbrechereinheit einen beweglichen, angetriebenen ersten Unterbrecherkontakt auf, der zum Öffnen und Schliessen des Hochspannungsleistungsschalters mit einem zweiten Unterbrecherkontakt zusammen wirkt. Dabei weist der Schalter einen beweglichen Schaltkontakt auf, dessen Bewegung mittels eines Getriebes an die Bewegung des ersten Unterbrecherkontakts mechanisch gekoppelt ist. Der Schaltkontakt ist zum Einfügen des Einschaltwiderstandes um eine Drehachse drehbar angeordnet. Dabei ist der Schalter und die Unterbrechereinheit in einem ersten Gehäuseteil des Hochspannungsleistungsschalters und der Einschaltwiderstand in einem zweiten Gehäuseteil des Hochspannungsleistungsschalters angeordnet. Dabei ist die Achse eine Gehäuseachse des ersten Gehäuseteils. Dies erlaubt die Geometrie das erste Gehäuseteils an den Schalter und die Unterbrechereinheit anzupassen. Ebenso kann die Geometrie des zweiten Gehäuseteils an den Einschaltwiderstand angepasst werden. Dies erlaubt insgesamt eine kompakte Bauweise des Hochspannungsleistungsschalters.

Gemäss einer bevorzugten Ausführungsform weist der gasisolierte, metallgekapselte Hochspannungsleistungsschalter eine Unterbrechereinheit, einen Einschaltwiderstand und einen in Serie zum Einschaltwiderstand geschalteten Schalter zum Einfügen des Einschaltwiderstandes in den Stromkreis unter Last auf. Dabei weist die Unterbrechereinheit einen beweglichen, angetriebenen ersten Unterbrecherkontakt auf, der zum Öffnen und Schliessen des Hochspannungsleistungsschalters mit einem zweiten Unterbrecherkontakt zusammen wirkt. Dabei weist der Schalter einen beweglichen Schaltkontakt auf, dessen Bewegung mittels eines Getriebes an die Bewegung des ersten Unterbrecherkontakts mechanisch gekoppelt ist. Der Schaltkontakt ist zum Einfügen des Einschaltwiderstandes um eine Drehachse drehbar angeordnet. Die Kulissensteuerung weist zwei Äste auf. Der erste Ast wird beim Schliessen der Unterbrechereinheit durchlaufen und der zweite Ast wird beim Öffnen der Unterbrechereinheit durchlaufen. Dies ermöglicht, dass der Schalter zum Zuschalten des Einschaltwiderstandes nur beim Schliessen der Unterbrechereinheit geschlossen wird. Der zweite Ast ist derart ausgebildet, dass der Schalter beim Öffnen der Unterbrechereinheit nicht geschlossen wird.

Gemäss einer darauf aufbauenden Ausführungsform definieren der erste Ast und der zweite Ast eine kontinuierlich durchlaufene Kurvenbahn, die geschlossen ist. Dadurch wird die Bewegung des Schaltkontakts in eindeutiger Weise durch die Kulissensteuerung definiert.

Weitere bevorzugte Ausführungsformen sind in den weiteren abhängigen Ansprüchen angegeben.

### Kurze Beschreibung der Zeichnung

Im Folgenden wird der Erfindungsgegenstand anhand einer bevorzugten Ausführungsform näher erläutert. Es zeigen rein schematisch:

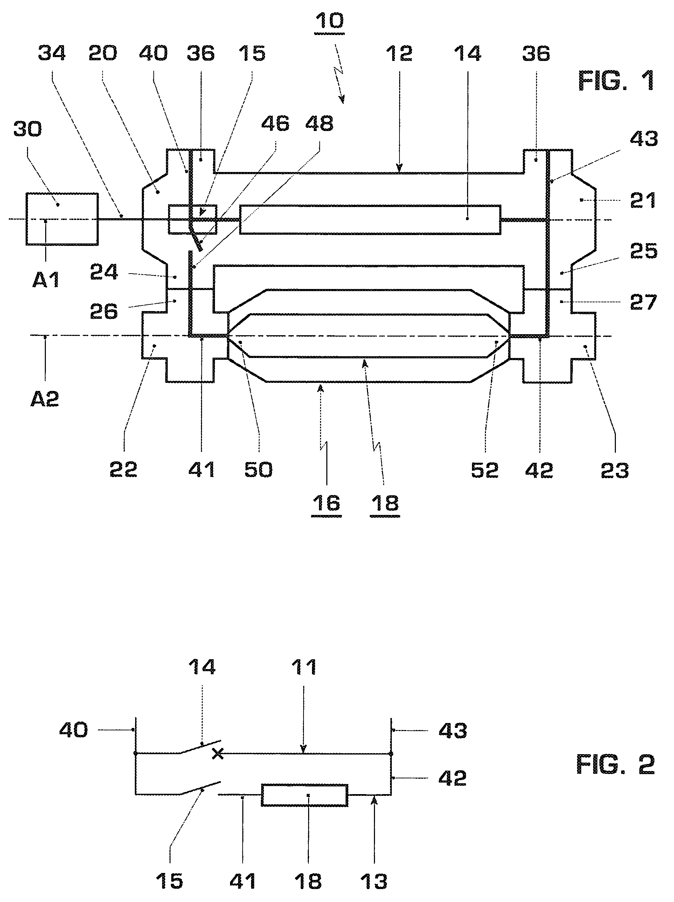

- Fig. 1: ein erstes Ausführungsbeispiel eines erfindungsgemässen Hochspannungsleistungsschalters mit einem ersten Gehäuseteil mit einer darin angeordneten Unterbrechereinheiten zum Unterbrechen eines Hauptstrompfades und einem Schalter zum Einbewegt wird. Durch eine gasdichte Durchführung ist die Antriebsstange 34 von ausserhalb des ersten Gehäuseteils 12 in dieses hinein geführt.

Die beiden Verbindungsendbereiche 20, 21 des ersten Gehäuseteils 12 weisen je einen Abgangsstutzen 36 auf, mittels welchen der Hochspannungsleistungsschalter 10 mit weiteren Elementen einer gasisolierten Schaltanlage verbunden werden kann. Die Abgangsstutzen 36 sind bezüglich der ersten Gehäuseachse A1 seitlich, gegenüberliegend den Verbindungsstutzen 24, 25 angeordnet.

Um den Hochspannungsleistungsschalter 10 elektrisch mit weiteren Elementen der gasisolierten Schaltanlage zu verbinden, verläuft durch den Abgangsstutzen 36 des antriebsseitigen Verbindungsendbereichs 20 ein Leiter 40, der mittels bekannten Isolationselementen (nicht gezeigt) beabstandet vom ersten Gehäuseteil 12 gehalten ist. Der Leiter 40 verläuft von der Öffnung des Abgangsstutzens 36 zum Schalter 15. Der Leiter 40 ist elektrisch mit einem nachfolgend beschriebenen, beweglichen Schaltkontakt 46 des Schalters 15 und mit einem beweglichen ersten Unterbrecherkontakt 32 der Unterbrechereinheit 14 verbunden.

Ein nachfolgend beschriebener, feststehender Gegenkontakt 48 des Schalters 15, der zum Schliessen des Schalters 15 mit dem beweglichen Schaltkontakt 46 zusammen wirkt, ist innerhalb des Verbindungsstutzens des antriebsseitigen Verbindungsendbereichs 20 des ersten Gehäuseteils 12 angeordnet. Vom Gegenkontakt 48 verläuft ein Leiter 41 durch den antriebsseitigen Verbindungsendbereich 22 des zweiten Gehäuseteils 16 hindurch und verbindet den Gegenkontakt 48 mit einem ersten Anschlusskontakt 50 des Einschaltwiderstands 18.

Ein zweiter Anschlusskontakt 52 des Einschaltwiderstands 18 ist über einen weiteren Leiter 42, der durch den Verbindungsendbereich 23 des zweiten Gehäuseteils 16 hindurch verläuft, mit einem Leiter 43 verbunden, der vom Verbindungsstutzen 25 des vom Antrieb 30 abgewanden Verbindungsendbereichs 21 des ersten Gehäuseteils 12 zum Abgangsstuten 36 desselben Verbindungsendbereichs 21 verläuft. Mit diesem Leiter 43 ist ebenfalls ein zum Schliessen der Unterbrechereinheit 14 bestimmter zweiter Unterbrecherkontakt 33 verbunden. Die Leiter 40, 41, 42, 43 sind mittels bekannten, scheibenförmigen oder konischen Isolatoren innerhalb des ersten beziehungsweise zweiten Gehäuseteils 12, 16 derart gehalten, dass sie in radialer Richtung zum Leiter 40, 41, 42, 43 möglichst gleichmässige Abstände zum ersten bzw. zweiten Gehäuseteil 12, 16 aufweisen.

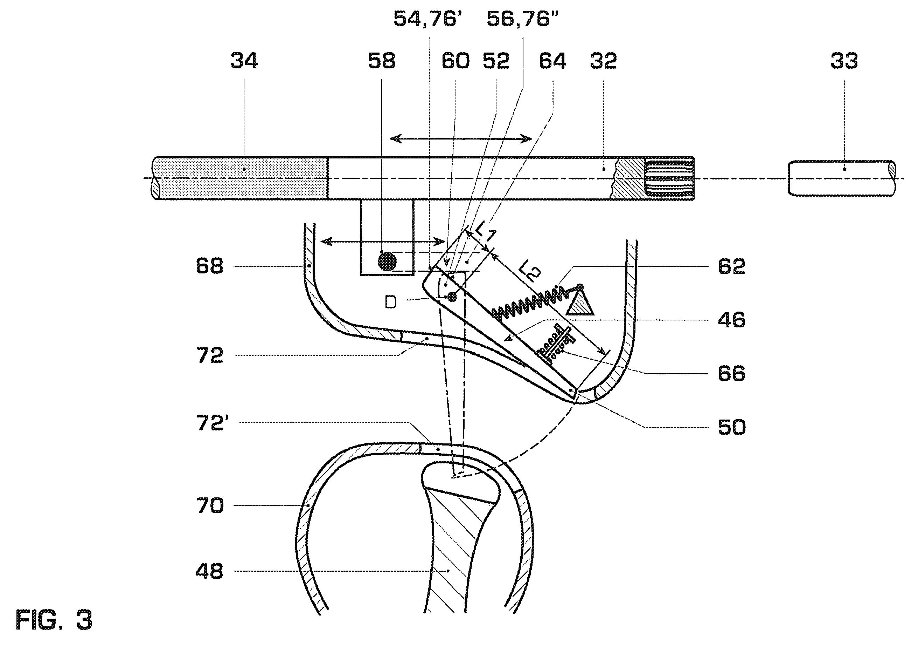

Fig. 3 zeigt den Schalter 15 sowie Teile der Unterbrechereinheit 14 des erstes Ausführungsbeispiels detailliert.

Der entlang der ersten Gehäuseachse A1 bewegliche erste Unterbrecherkontakt 32 ist direkt mit der Antriebsstange 34 verbunden. Der erste Unterbrecherkontakt 32 wirkt zum Schliessen der Unterbrechereinheit 14 mit dem auf der ersten Gehäuseachse A1 angeordneten zweiten Unterbrecherkontakt 33 zusammen, wobei zum Schliessen der erste Unterbrecherkontakt 32 in bekannter Art und Weise auf den zweiten Unterbrecherkontakt 33 aufgeschoben wird. Folglich wird der erste Unterbrecherkontakt 32 zum Schliessen der Unterbrechereinheit 14 aus der in Fig. 3 gezeigten offenen Position der Unterbrechereinheit 14 über eine Kontaktposition, in welcher der erste Unterbrecherkontakt 32 den zweiten Unterbrecherkontakt 33 berührt, in die geschlossene Position bewegt, in welcher der erste Unterbrecherkontakt 32 vollständig auf den zweiten Unterbrecherkontakt 33 aufgeschoben ist. Beim Öffnen der Unterbrechereinheit 14 bewegt sich der erste Unterbrecherkontakt 32 in umgekehrter Richtung.

Der erste Unterbrecherkontakt 32 wie auch der zweite Unterbrecherkontakt 33 besteht bevorzugt in bekannter Art und Weise jeweils aus einem Nennstromkontakt und einem Abbrandkontakt (nicht dargestellt). Im geöffneten Zustand der Unterbrechereinheit 14 ist der ersten Unterbrecherkontakt 32 von dem zweiten Unterbrecherkontakt 33 derart beabstandet, dass selbst hohe Spannungsspitzen, wie sie beispielsweise aufgrund von Blitzeinschlägen oder anderen Störungen in Hochspannungsnetzen auftreten können, nicht zu einer Ausbildung eines Lichtbogens zwischen dem ersten Unterbrecherkontakt 32 und dem zweiten Unterbrecherkontakt 33 führt.

Der Schalter 15 weist einen schwertförmigen, um eine bezüglich des Gehäuses des Hochspannungsleistungsschalters 10 ortsfest gelagerte Drehachse D beweglichen Schaltkontakt 46 auf, der dazu bestimmt ist mit dem feststehenden Gegenkontakt 48 zusammen zu wirken. Der Schaltkontakt 46 ist im Wesentlichen länglich und eben ausgebildet. Seine Länge beträgt bevorzugt zwischen 15 cm und 50 cm und besonders bevorzugt zwischen 25 cm und 40 cm. Die Dicke des Schaltkontakts 46 liegt bevorzugt zwischen 0.5 mm und 10 mm und besonders bevorzugt wischen 2 mm und 4 mm. Als Material für den Schaltkontakt 46 eignet sich besonders ein leichtes Metall wie beispielsweise Aluminium.

Der eine Endbereich 50 des Schaltkontakts 46 - im Weiteren als Kontaktierungsendbereich 50 bezeichnet - ist dazu bestimmt, zum Schliessen des Schalters 15 den Gegenkontakt 48 zu kontaktieren. Der andere Endbereich 52 - im Weiteren als Betätigungsendbereich 52 bezeichnet - weist zwei ineinander übergehende Führungsflächen 54, 56 auf, welche je einen Ast 76', 76" einer Kulissensteuerung 60 bilden. Die Führungsflächen 54, 56 sind dazu bestimmt, mit einem an die Bewegung des ersten Unterbrecherkontakts 32 der Unterbrechereinheit 14 gekoppelten Aktuator 58 der Kulissensteuerung 60 zusammen zu wirken.

Durch den Aktuator 58 und durch den Schaltkontakt 46 ist ein Getriebe 60 ausgebildet, welches auch als Kurvengetriebe bezeichnet wird. Der Aktuator 58 bildet dabei das erste Getriebeteil und der Schaltkontakt 46 das mit dem ersten Getriebeteil zusammenwirkende zweite Getriebeteil. Durch die Wahl der Anordnung der beiden Führungsflächen 54, 56 bezüglich der Drehachse D wird die Übertragung der Bewegung des Aktuators 58 auf den Schaltkontakt 46 definiert. Aufgrund der Führungsflächen 54, 56, welche je einen Ast 76', 76" einer Bewegungsübertragungskurve bilden, wird ein derartiges Getriebeglied auch als eine Kulisse und das Getriebe als eine Kulissensteuerung bezeichnet.

Zwischen dem Betätigungsendbereich 52 und dem Kontaktierungsendbereich 50 ist die Drehachse D des Schaltkontakts 46 derart angeordnet, dass ein Hebelverhältnis von L1:L2 zwischen 1:2 bis 1:7 geschaffen wird, wobei mit L1 der Abstand von der Drehachse D zum Angriffpunkt des Aktuators 58 an den Betätigungsendbereichs 52 und mit L2 der Abstand von der Drehachse D zum freien Ende des Kontaktierungsendbereichs 50 bezeichnet ist. Bevorzugt beträgt das Hebelverhältnis L1:L2 1:2.5 bis 1:6 und besonders bevorzugt 1:2.5 bis 1:4. Das Hebelverhältnis bewirkt, dass der Kontaktierungsendbereich 50 mit einem durch das Hebelverhältnis L1:12 bestimmten grösseren Geschwindigkeit bewegt wird als der Betätigungsendbereich 52.

Die Drehachse D liegt zumindest annähernd rechtwinklig zu einer Ebene, in welcher zumindest teilweise die Aktuator 58 und der Gegenkontakt 48 liegen. Weiter bewegt sich der ebene, bewegliche Schaltkontakt 46 ebenfalls in dieser Ebene.

Wie nachfolgend detailliert beschrieben, wird mittels des Aktuators 58 der Schaltkontakt 46 durch die Bewegung zum Schliessen der Unterbrechereinheit 14 von der in Fig. 3 gezeigten offenen Position (durchgezogene Line in Fig. 3) in die geschlossene Position (durchbrochenen Linie in Fig. 3) bewegt. Bei dieser Bewegung wird eine Rückholfeder 62 gespannt, mittels welcher der Schaltkontakt 46 am Ende des Schliessvorgangs der Unterbrechereinheit 14 wieder zurück in die offene Position bewegt wird. Folglich schliesst und öffnet der Schalter 15 während der Schliessbewegung der Unterbrechereinheit 14.

Der fest an die Bewegung des ersten Unterbrecherkontakts 32 gekoppelte Aktuator 58 bewegt sich entlang der Richtung der ersten Gehäuseachse A1. Anfänglich dieser Bewegung des Aktuators 58 gelangt dieser in Anlage an die erste Führungsfläche 54 des Schaltkontakts 46, welche sich in der Bewegungsbahn 64 des Aktuators 58 befindet und den ersten Ast 76' bildet. Bei der weiteren Bewegung des Aktuators 58 wird daher der Schaltkontakt 46 durch den Aktuator 58 aus der in Fig. 3 gezeigten offenen Position heraus bewegt, wobei - wegen der Drehbewegung des Schaltkontakts 46 - der Kontaktpunkt des Aktuators 58 an die erste Führungsfläche 54 vom freien Endbereich des Betätigungsendbereichs 52 zunächst in Richtung zur Drehachse D hin und danach in umgekehrter Richtung, auf das freie Ende des Betätigungsendbereichs 52 zu wandert. Bei der weiteren Schliessbewegung des ersten Unterbrecherkontakts 32 gelangt der Aktuator 58 ausser Anlage an den Schaltkontakt 46. Noch bevor der Aktuator 58 ausser Anlage an den Schaltkontakt 46 gerät, durchläuft die Unterbrechereinheit 14 die Kontaktposition.

Da der Aktuator 58 ausser Anlage an die erste Führungsfläche 54 ist, wird der Schaltkontakt 46 von der nun gespannten Rückholfeder 62 in die offene Position zurückgezogen, wodurch der Schalter 15 wieder geöffnet wird.

Beim Öffnen der Unterbrechereinheit 14 wird der erste Unterbrecherkontakt 32 von der geschlossen Position in die offene Position verschoben. Da der Betätigungsendbereich 52 in der Bewegungsbahn 64 des Aktuators 58 liegt, gelangt der Aktuator 58 beim Öffnen der Unterbrechereinheit 14 in Anlage an die zweite Führungsfläche 56 des Betätigungsendbereichs 52, welche den zweiten Ast 76" der Kulissensteuerung 60 bildet. Durch den Aktuator 58 wird der Betätigungsendbereich 52 aus der Bewegungsbahn 64 des Aktuators 58 gedrückt. Sobald der Aktuator 58 ausser Anlage an den Betätigungsendbereich 52 kommt, bewegt sich der Schaltkontakt 46 aufgrund einer bei dieser Bewegung gespannten Rückstellfeder 66 wieder in die Ausgangsposition zurück. Alternativ zur Rückstellfeder 66 kann bei geeigneter Dimensionierung der Rückholfeder 62 auch das durch die Schwerkraft verursachte Drehmoment auf den Schaltkontakt ausgenützt werden. Insbesondere bleibt während dem Öffnen der Unterbrechereinheit 14 der Schalter 15 geöffnet.

Wie obenstehend beschrieben, liegt der Aktuator 58 nicht dauernd an die erste Führungsfläche 56 beziehungsweise an die zweite Führungsfläche 58 an. Folglich ist der Schaltkontakt 46 nur zeitweise während des Schliessens der Unterbrechereinheit 14 an die Bewegung des Aktuators 58 mechanisch gekoppelt. Insbesondere ist die Zeitspanne der Kopplung der Bewegung des Schaltkontakts 46 an die Bewegung des Aktuators 58 kürzer als die Zeitspanne der Schliessbewegung der Unterbrechereinheit 14.

Um die vom Schaltkontakt 46 und dem Gegenkontakt 48 erzeugten elektrischen Felder weitmöglichst abzuschirmen beziehungsweise um hohe Feldstärken aufgrund von Spitzen und Kanten zu vermeiden und dadurch eine kompakte Bauweise zu ermöglichen, ist der Schaltkontakt 46 wie auch der Gegenkontakt 48 von je einer Abschirmung 68, 70 (in Fig. 1 nicht dargestellt) gegenüber dem ersten Gehäuseteil (in Fig.

3 nicht gezeigt) wie auch gegenüber dem Gegenkontakt 48 beziehungsweise dem Schaltkontakt 46 abgeschirmt. Die Abschirmungen 68, 70 sind mit dem Schaltkontakt 46 beziehungsweise dem Gegenkontakt 48 elektrisch verbunden. Weiter wird durch die Abschirmungen 68, 70 erreicht, dass der minimal notwendige Abstand zum Beherrschen hohe Spannungsunterschiede zwischen dem Schaltkontakt 46 und Gegenkontakt 48 verringert werden kann. Der Abstand von der den Schaltkontakt 46 in seiner offenen Position umhüllenden Abschirmung 68 zu der den Gegenkontakt 48 umhüllenden Abschirmung 70 ist derart gewählt, dass die Unterbrechereinheit 14 wie auch der Schalter 15 dieselbe Maximalspannung zuverlässig beherrscht, d.h. dass auch bei unvorgesehen auftretenden Spannungsspitzen keine Lichtbogen ausgebildet werden.

Die Abschirmungen 68 auf Seite des Schaltkontakts 46 weist einen Schlitz 72 auf, sodass der Schaltkontakt 46, der in der offenen Position vollständig von dieser Abschirmung 68 umhüllt ist, aus dieser Abschirmung 68 austreten kann. Ebenso weist die Abschirmung 70 auf der Seite des Gegenkontakts 48 einen Schlitz 72' auf, durch welchen der Kontaktierungsendbereich 50 des Schaltkontakts 46 diese Abschirmung 70 durchdringt und in den Gegenkontakt 48 eingreifen kann.

Der zeitliche Bewegungsablauf von Unterbrechereinheit 14 und Schalter 15 ist wie folgt.

Während die Unterbrechereinheit 14 schliesst, schliesst und öffnet der Schalter 15. Der erste Unterbrecherkontakt 32 bewegt sich auf den zweiten Unterbrecherkontakt 33 zu, wodurch sich der Abstand zwischen dem ersten und zweiten Unterbrecherkontakt 32, 33 verringert. Bevor es zu einer Ausbildung eines Lichtbogens zwischen den Unterbrecherkontakten 32, 33 kommt, kontaktiert der Schaltkontakt 46 den Gegenkontakt 48, sodass der Nebenstrompfad 13 zwischen dem Leiter 40 und dem Leiter 43 über den Schalter 15 und den Einschaltwiderstand 18 geschlossen wird. Nachdem der erste Unterbrecherkontakt 32 den zweiten Unterbrecherkontakt 33 kontaktiert und durch die Unterbrechereinheit 14 somit der Hauptstrompfad 11 geschlossen ist, öffnet der Schalter 15 sodass der Nebenstrompfad 13 unterbrochen wird und der Einschaltwiderstand 18 aus dem Stromkreis entfernt wird.

Beim Öffnen der Unterbrechereinheit 14, wird der Schalter 15 nicht geschlossen.

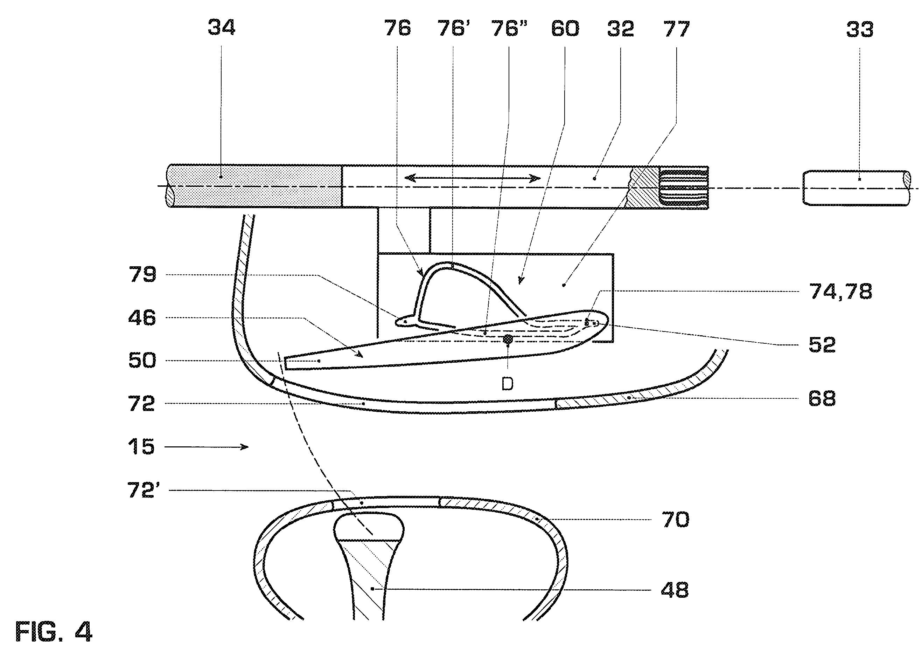

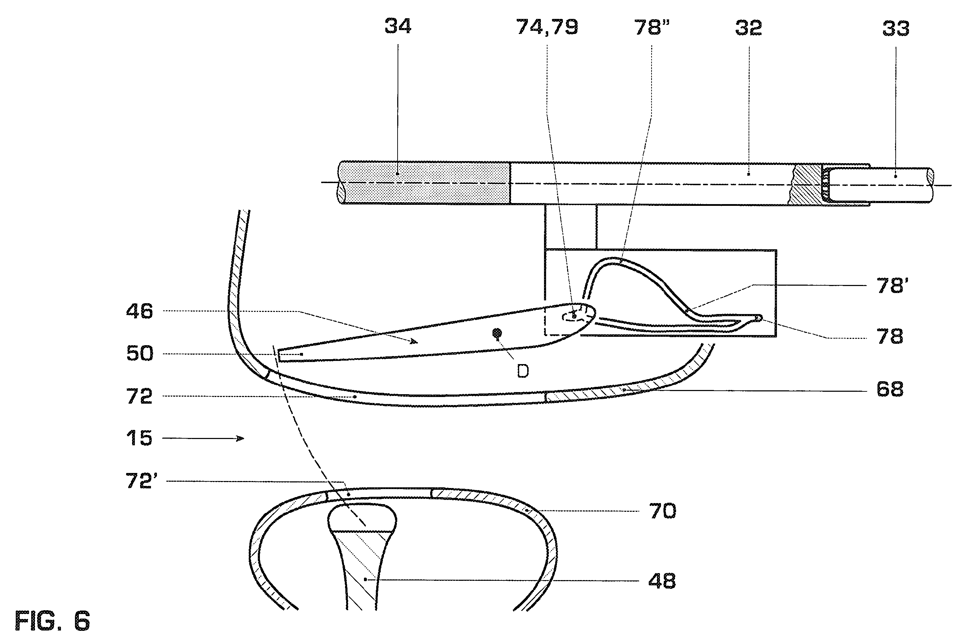

Der Schalter 15 eines zweiten Ausführungsbeispiels des Hochspannungsleistungsschalters ist in den Fig. 4-7 gezeigt. Bis auf den Schalter 15 ist das zweite Ausführungsbeispiel gleich wie das erste Ausführungsbeispiel ausgebildet. Die in den Fig. 4-7 gezeigten Teile der Unterbrechereinheit 14 sind ebenfalls gleich ausgebildet wie im ersten Ausführungsbeispiel.

Der Schalter 15 weist wiederum den um die Drehachse D beweglichen, schwertförmigen Schaltkontakt 46 auf. Am Betätigungsendbereich 52 weist der Schaltkontakt 46 einen Dorn 74 auf, der in eine Kurvenbahn 76 einer Kulissenscheibe 77 eingreift. Die Kurvenbahn 76 ist durch eine Nute ausgebildet. Das Zusammenwirken des Dorns 74 mit der Kurvenbahn 76 bildet die Kulissensteuerung 60.

Wiederum sind durch die Drehachse D, um welche herum der Schaltkontakt 56 drehbar ist, die zwei Hebel L1, L2 am Schaltkontakt 46 definiert, wobei der eine Hebel L1 durch den Dorn 74 und die Drehachse D und der andere Hebel L2 durch den Kontaktierungsendbereich 50 und die Drehachse D definiert ist.

Alternativ zu der in den Figuren gezeigten Ausführung des Schaltkontakts, kann die Drehachse auch an dem dem Kontaktierungsendbereich gegenüberliegenden Endbereich des Schaltkontakts und der Dorn zwischen der Drehachse und dem Kontaktierungsendbereich angeordnet sein.

Die Kulissenscheibe 77 ist fest an die Bewegung des ersten Unterbrecherkontakts 32 gekoppelt. Die Kulissenscheibe 77 weist die Kurvenbahn 76 auf, welche einen ersten Ast 76' und einen zweiten Ast 76" aufweist, wobei die beiden Äste 76', 76" zusammenhängend sind und die beiden Endbereiche jedes Astes 76', 76" in den anderen Ast 76", 76' übergehen. Der erste Ast 76' definiert die Bewegung des Schaltkontakts 46 beim Schliessen der Unterbrechereinheit 14 und der zweite Ast 76" definiert die Bewegung des Schaltkontakts 46 beim Öffnen der Unterbrechereinheit 14. Der zeitliche Bewegungsablauf der Unterbrechereinheit 14 und des Schalters 15 ist im Wesentlichen analog wie der im Zusammenhang mit dem ersten Ausführungsbeispiel beschriebene Bewegungsablauf. Das zweite Ausführungsbeispiel erlaubt jedoch eine bessere Abstimmung des Bewegungsablaufs des Schaltkontakts 46 an die Bewegung des ersten Unterbrecherkontakts 32.

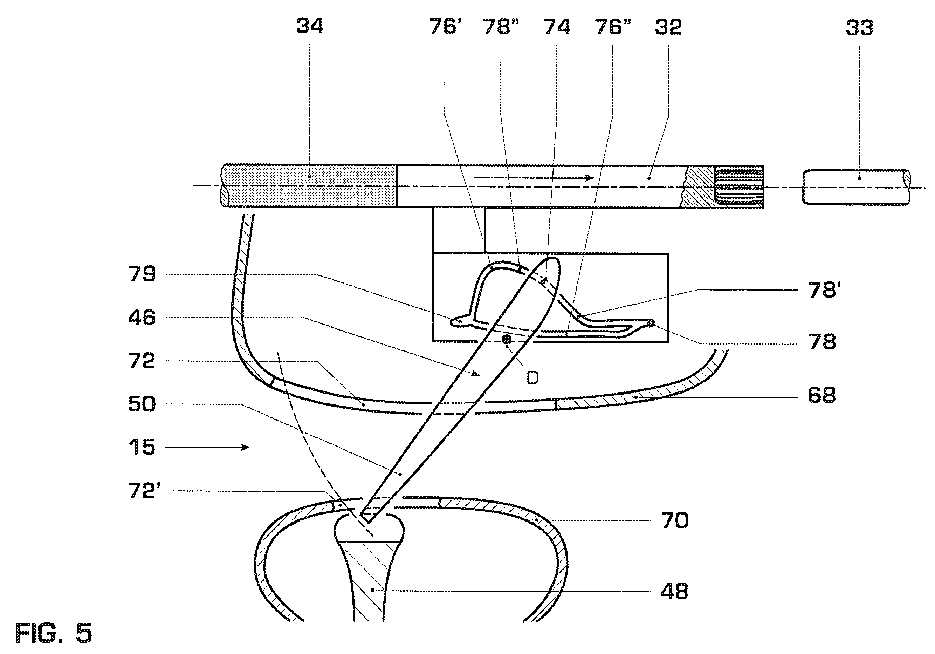

Der erste Ast 76' verläuft von einem Punkt 78 (siehe Fig. 5-7), der einen Zustand der Kulissensteuerung definiert, bei welchem die Unterbrechereinheit 14 wie auch der Schalter 15 geöffnet sind, zu einem Punkt 78'. Zwischen dem Punkt 78 und dem Punkt 78' verläuft der erste Ast 76' im Wesentlichen parallel zur Bewegungsrichtung des ersten Unterbrecherkontakts 32 beziehungsweise nur leicht weg vom Gegenkontakt 48, sodass sich der Schaltkontakt 46 beim Durchlaufen dieses Abschnittes, am Anfang der Schliessbewegung des ersten Unterbrecherkontakts 32, im Wesentlichen nicht bewegt und folglich nicht an die Bewegung des ersten Unterbrecherkontakts 32 gekoppelt ist. Anschliessend an den Punkt 78' verläuft der erste Ast 76' vom Gegenkontakt 48 weg, sodass dieser Abschnitt die Bewegung des ersten Unterbrecherkontakts 32 auf den Schaltkontakt 46 übertragen wird. Beim Durchlaufen des Punktes 78" ist der Schalter 15 geschlossen; der Schaltkontakt 46 kontaktiert den Gegenkontakt 48. In der Umgebung des Punktes 78" ist der erste Ast 76' derart geformt, dass der Schalter 15 während einer Zeitspanne in seiner geschlossenen Position bleibt, während die Unterbrechereinheit 14 die Kontaktposition durchläuft. Der weitere Verlauf des ersten Astes 76' definiert das Öffnen des Schalters 15, das heisst, der erste Ast 76' zwischen dem Punkt 78" und dem Punkt 79 derart geformt ist, dass beim Durchlaufen diese Streckenabschnitts der Schalter 15 schnell geöffnet wird.

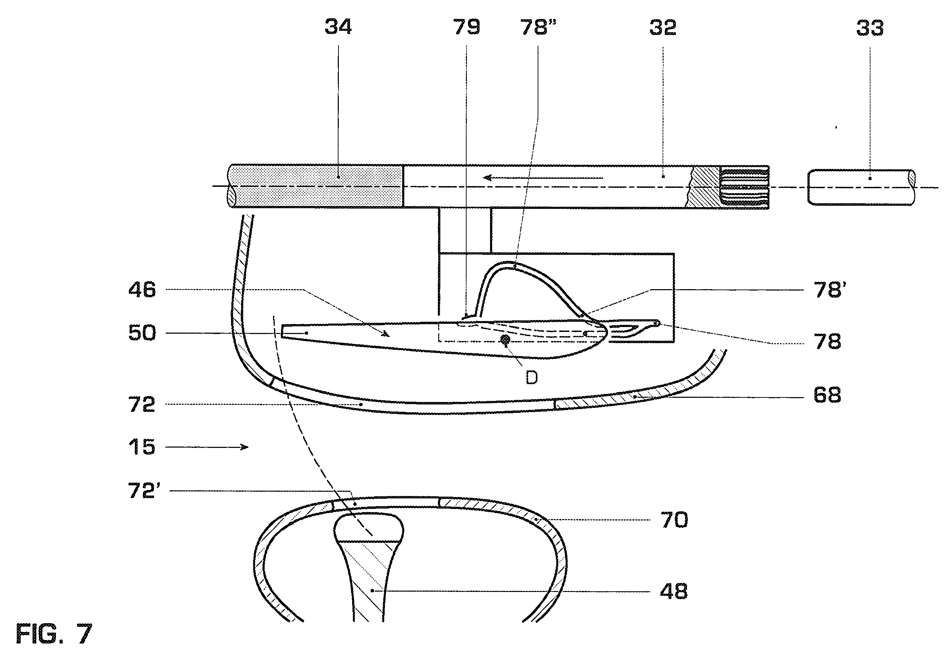

Der zweite Ast 76" zwischen dem Punkt 79 und dem Punkt 78 verläuft im Wesentlichen parallel zur Bewegungslinie des ersten Unterbrecherkontakts 32, sodass der Schalter 15 beim Öffnen der Unterbrechereinheit 14 offen bleibt (siehe Fig. 7) und folglich der Schaltkontakt 46 zumindest im Wesentlichen nicht an die Bewegung des ersten Unterbrecherkontakts 32 gekoppelt ist. Die Kurvenbahn 76 ist in den Bereichen, in denen die beiden Äste 76', 76" zusammen verlaufen (im Bereich des Punktes 78 und des Punktes 79) derart ausgeformt, dass aufgrund der Trägheit des Schaltkontakts 46 beim Schliessen der Unterbrechereinheit 14 der erste Ast 76' und beim Öffnen der Unterbrechereinheit 14 der Ast 76" durchlaufen wird.

Während des Schliessens des Schalters 15 überstreicht der Schaltkontakt 46 bevorzugt einen Winkelbereich zwischen 30° und 80°, bevorzugt zwischen 35° und 70° und besonders bevorzugt zwischen 45° und 60°. Dadurch kann erreicht werden, dass sich der Kontaktierungsendbereich 50 näherungsweise auf einer Geraden bewegt, wodurch die Gefahr der Ausbildung eines Lichtbogens minimiert werden kann, beziehungsweise die Anforderung an die Abschirmung beziehungsweise an die Geometrie des Verbindungsendbereichs 20 des ersten Gehäuseteils 12 vereinfacht werden kann.

Durch die Kulissenscheibe 77 mit der Kurvenbahn 76 und durch den mit der Kulissenscheibe 77 zusammenwirkenden Schaltkontakt 46 ist ähnlich wie beim ersten Ausführungsbeispiel ein Getriebe 60 ausgebildet, welches auch als Kurvengetriebe bezeichnet wird. Alternativ wird ein derartiges Getriebe auch als Kulissensteuerung bezeichnet. Die Kulissenscheibe 77 bildet dabei das erste Getriebeteil und der Schaltkontakt 46 das mit dem ersten Getriebeteil zusammenwirkende zweite Getriebeteil. Die mechanische Kopplung des zweiten Getriebeteils an das erste Getriebeteil erflogt durch das Eingreifen des am Schaltkontakt 46 ausgebildeten Dorns 74 in die an der Kulissenscheibe 77 ausgebildete Kurvenbahn 76. Durch die Wahl der Anordnung der beiden Äste 76', 76" der Kurvenbahn 76 ist die Übertragung der Bewegung der Kulissenscheibe 77 auf den Schaltkontakt 46 definiert.

Der Schaltkontakt 46 und der Gegenkontakt 48 sind analog zum ersten Ausführungsbeispiel je mit einer Abschirmung 68, 70 versehen.

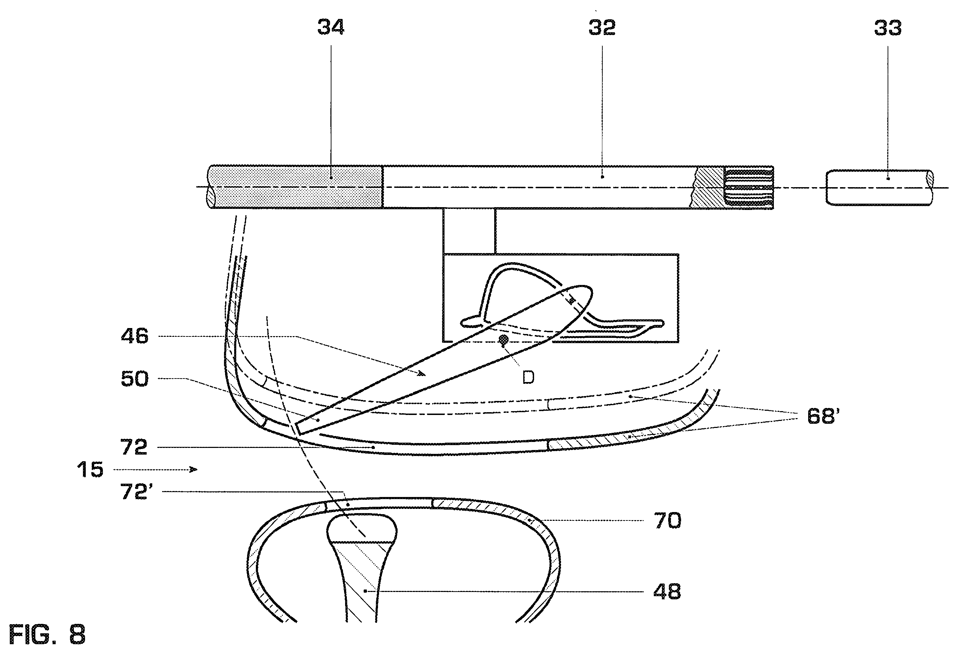

Ein in Fig. 8 gezeigtes drittes Ausführungsbeispiel ist weitgehend gleich wie das zweite Ausführungsbeispiel ausgebildet. Anstelle der festen Abschirmung 68 zum Abschirmen des Schaltkontakts 46 ist diese Abschirmung 68' in diesem dritten Ausführungsbeispiel beweglich ausgebildet.

Die bewegliche Abschirmung 68' ist entweder direkt an die Bewegung des ersten Unterbrecherkontakts 32, direkt an die Bewegung des Schaltkontaktes 46 oder mittels einer weiteren Kulissensteuerung an die Bewegung des ersten Unterbrecherkontakts 32 gekoppelt. Eine direkte Kopplung kann beispielsweise über ein Hebelgelenk erfolgen. Die weitere Kulissensteuerung ist im Wesentlichen analog zur oben beschriebenen Kulissensteuerung 60 ausgebildet, wobei die Kurvenbahn der weiteren Kulissensteuerung derart zu wählen ist, dass der unten beschriebene Bewegungsablauf der beweglichen Abschirmung durch die Kurvenbahn definiert ist.

Während der Schliessbewegung der Unterbrechereinheit 14 bewegt sich die bewegliche Abschirmung 68' des Schaltkontakts 46 von einer Ausgangsposition (in Fig. 8 durch unterbrochene Linien dargestellt) auf den Gegenkontakt 48 zu, sodass anfänglich der Kontaktierungsendbereich 50 des Schaltkontakts 46 bei der Bewegung in Richtung des Gegenkontakts 48 innerhalb der Abschirmung 68' bleibt (siehe Fig. 8, durch durchgezogene Linie dargestellt). Sobald ein Minimalabstand der beweglichen Abschirmung 68' zur Abschirmung 70 des Gegenkontakts 48 erreicht ist, wird die Bewegung der beweglichen Abschirmung 68' gestoppt und der Kontaktierungsendbereich 50 tritt durch den Schlitz 72 hindurch aus der beweglichen Abschirmung 68' aus und kontaktiert danach den Gegenkontakt 48. Der Minimalabstand ist derart bestimmt, dass unter normalen Bedingungen (d.h. keine unvorhergesehenen Spannungsspitzen) kein Lichtbogen zwischen den Abschirmungen 68', 70 entsteht. Nach dem Kontaktieren Öffnet der Schalter 15 wieder, wobei dies analog zum zweiten Ausführungsbeispiel abläuft. Während des Öffnens des Schalters 15 wird die bewegliche Abschirmung 68' wieder in ihre Ausgangsposition zurück bewegt.

Beim Öffnen der Unterbrechereinheit 14 verbleibt entweder die bewegliche Abschirmung 68' in ihrer Ausgangsposition oder wird wiederum in die Position mit Minimalabstand zur Abschirmung 70 verschoben.

Mittels der beweglichen Abschirmung kann die Brenndauer eines zwischen dem Schaltkontakt 46 und der Abschirmung 70 des Gegenkontakts 48 brennenden Lichtbogens im Vergleich zum zweiten Ausführungsbeispiel verkürzt werden.

### Bezugszeichenliste

- 10: Hochspannungsleistungsschalter
- 11: Hauptstrompfad
- 12: erstes Gehäuseteil
- 13: Nebenstrompfad
- 14: Unterbrechereinheit
- 15: Schalter
- 16: zweites Gehäuseteil
- 18: Einschaltwiderstand
- 20-23: Verbindungsendbereiche
- 24-27: Verbindungsstutzen
- 30: Antriebseinheit
- 32: erster Unterbrecherkontakt
- 33: zweiter Unterbrecherkontakt
- 34: Antriebsstange
- 36: Abgangsstutzen
- 40-43: Leiter
- 46: Schaltkontakt
- 48: Gegenkontakt
- 50: Kontaktierungsendbereich
- 52: Betätigungsendbereich
- 54: erste Führungsfläche
- 56: zweite Führungsfläche
- 58: Aktuator
- 60: Getriebe, Kulissensteuerung
- 62: Rückholfeder
- 64: Bewegungsbahn
- 66: Rückstellfeder
- 68: Abschirmung von 46
- 70: Abschirmung von 48
- 68': bewegliche Abschirmung von 46
- 72, 72': Schlitz
- 74: Dorn
- 76: Kurvenbahn
- 76': erster Ast
- 76": zweiter Ast
- 77: Kulissenscheibe
- 78, 78', 78", 79: Punkte
- A1: erste Gehäuseachse
- A2: zweite Gehäuseachse
- D: Drehachse

## Patentansprüche

1. Gasisolierter, metallgekapselter Hochspannungsleistungsschalter mit einer Unterbrechereinheit (14), einem Einschaltwiderstand (18) und einem in Serie zum Einschaltwiderstand (18) geschalteten Schalter (15) zum Einfügen des Einschaltwiderstandes (18) in den Stromkreis unter Last, wobei die Unterbrechereinheit (14) einen beweglichen, über eine Antriebsstange (34) angetriebenen ersten Unterbrecherkontakt (32) aufweist, der zum Öffnen und Schliessen des Hochspannungsleistungsschalters mit einem zweiten Unterbrecherkontakt (33) zusammen wirkt, wobei der Schalter (15) einen beweglichen Schaltkontakt (46) aufweist, dessen Bewegung mittels eines Getriebes (60) an die Bewegung des ersten Unterbrecherkontakts (32) mechanisch gekoppelt ist, wobei der Schaltkontakt (46) zum
Einfügen des Einschaltwiderstandes (18) um eine Drehachse (D) drehbar angeordnet ist, **dadurch gekennzeichnet, dass** das Getriebe
(60) eine lineare Bewegung einer Antriebsstange (34) und/oder des ersten Unterbrecherkontakts (32) in Richtung einer ersten Achse (A1) in eine Drehbewegung des Schaltkontaktes (46) um die Drehachse (D) herum umsetzt.

2. Hochspannungsleistungsschalter gemäss Anspruch 1, **dadurch gekennzeichnet, dass** die Drehachse (D) ortsfest gelagert ist.

3. Hochspannungsleistungsschalter gemäss Anspruch 1 oder 2, **dadurch gekennzeichnet, dass** die mechanische Kopplung des Schaltkontaktes (46) an die diesen Schaltkontakt (46) antreibende Bewegung lediglich während einer Zeitspanne während des Schliessens der Unterbrechereinheit erfolgt, wobei diese Zeitspanne kürzer ist als die Dauer der Bewegung zum Schliessen der Unterbrechereinheit (14).

4. Hochspannungsleistungsschalter gemäss einem der Ansprüche 1 bis 3, **dadurch gekennzeichnet, dass** das Getriebe (60) ein Kurvengetriebe, insbesondere eine Kulissensteuerung ist.

5. Hochspannungsleistungsschalter gemäss einem der Ansprüche 1 bis 4, **dadurch gekennzeichnet, dass** der erste Unterbrecherkontakt (32) entlang einer Achse (A1) beweglich ist und der zweite Unterbrecherkontakt (33) auf dieser Achse (A1) angeordnet ist, und dass diese Achse (A1) ortsfest ist.

6. Hochspannungsleistungsschalter gemäss einem der Ansprüche 1 bis 5, **dadurch gekennzeichnet, dass** der Schalter (15) während dem Öffnen der Unterbrechereinheit (14) geöffnet bleibt.

7. Hochspannungsleistungsschalter gemäss einem der Ansprüche 1 bis 6, **dadurch gekennzeichnet, dass** ein Hauptstrompfad (11) des Hochspannungsleistungsschalters mittels der Unterbrechereinheit (14) unterbrechbar ist und parallel zum Hauptstrompfad (11) ein Nebenstrompfad (13) geführt ist, welcher den Schalter (15) und den Einschaltwiderstand (18) aufweist.

8. Hochspannungsleistungsschalter gemäss einem der Ansprüche 1 bis 7, **dadurch gekennzeichnet, dass** die Drehachse (D) rechtwinklig zur Achse (A1) steht.

9. Hochspannungsleistungsschalter gemäss einem der Ansprüche 1 bis 8, **dadurch gekennzeichnet, dass** das Getriebe (60) im selben Gasraum angeordnet ist wie der Schalter (15) und/oder die Unterbrechereinheit (14).

10. Hochspannungsleistungsschalter gemäss einem der Ansprüche 1 bis 9, **dadurch gekennzeichnet, dass** ein Hebelverhältnis eines ersten Hebels (L1) zu einem zweiten Hebel (L2) des Schaltkontakts (46) zwischen 1 zu 2 bis 1 zu 7, bevorzugt zwischen 1 zu 2.5 bis 1 zu 6 und besonders bevorzugt zwischen 1 zu 2.5 bis 1 zu 4 liegt, wobei der erster Hebel (L1) durch den Angriffspunkt der Kulissensteuerung (60) an den Schaltkontakts (46) und die Drehachse (D) definiert ist und der zweiter Hebel (L2) durch den Kontaktierungsendbereich (50) und die Drehachse (D) definiert ist.

11. Hochspannungsleistungsschalter gemäss einem der Ansprüche 1 bis 10, **dadurch gekennzeichnet, dass** der Schalter (15) und die Unterbrechereinheit (14) in einem ersten Gehäuseteil (12) des Hochspannungsleistungsschalters und der Einschaltwiderstand (18) in einem zweiten Gehäuseteil (16) des Hochspannungsleistungsschalters angeordnet sind und die Achse (A1) eine Gehäuseachse des ersten Gehäuseteils (12) ist.

12. Hochspannungsleistungsschalter gemäss einem der Ansprüche 1 bis 11, **dadurch gekennzeichnet, dass** die Kulissensteuerung (60) zwei Äste (76', 76") aufweist, wobei der erste Ast (76') beim Schliessen der Unterbrechereinheit (14) und der zweite Ast beim Öffnen (76") der Unterbrechereinheit (14) durchlaufen wird.

13. Hochspannungsleistungsschalter gemäss Anspruch 12, **dadurch gekennzeichnet, dass** der erste Ast (76') und der zweite Ast (76") eine kontinuierlich durchlaufene Kurvenbahn (76) definieren, welche geschlossen ist.

14. Hochspannungsleistungsschalter gemäss Anspruch 13, **dadurch gekennzeichnet, dass** die Kurvenbahn (76) beidseitig beschränkt ist.

15. Hochspannungsleistungsschalter gemäss Anspruch 12, **dadurch gekennzeichnet, dass** der erste Ast (76') und der zweite Ast (76") je einen ersten Endbereich und einen zweiten Endbereich ausweisen, wobei der erste Endbereich des ersten Astes (76') in den ersten Endbereich des zweiten Asts (76") übergeht und der zweite Endbereich des ersten Astes (76') vom zweiten Endbereich des zweiten Astes (76") beabstandet ist.

16. Hochspannungsleistungsschalter gemäss einem der Ansprüche 1 bis 15, **dadurch gekennzeichnet, dass** der bewegliche Schaltkontakt (46) zum Schliessen des Schalters (15) mit einem Gegenkontakt (48) zusammen wirkt, wobei der Schaltkontakt (46) wie auch der Gegenkontakt (48) in der offenen Position des Schalters (15) je von einer Abschirmung (68, 68', 70) abgeschirmt werden.

17. Hochspannungsleistungsschalter nach Anspruch 16, **dadurch gekennzeichnet, dass** die zum Abschirmen des Schaltkontakts (46) bestimmte Abschirmung (70') beweglich ausgebildet ist und direkt an die Bewegung des Unterbrecherkontakts (32) oder der Schaltkontakts (46) gekoppelt ist, oder über eine weitere Kulissensteuerung an die Bewegung des Unterbrecherkontakts (32) gekoppelt ist.

18. Hochspannungsleistungsschalter nach Anspruch 1, **dadurch gekennzeichnet, dass** der Schaltkontakt (46) eine Dicke von 0.5 mm bis 10 mm aufweist.

19. Hochspannungsleistungsschalter nach Anspruch 1, **dadurch gekennzeichnet, dass** der Schaltkontakt (46) aus Aluminium ist.

20. Hochspannungsleistungsschalter nach Anspruch 1, **dadurch gekennzeichnet, dass** der Schaltkontakt (46) einen Betätigungsendbereich (52) mit zwei ineinander übergehenden Führungsflächen (54, 56) aufweist,
und dass das Getriebe (60) einen an die Unterbrechereinheit (14) angekoppelten Aktuator (58) aufweist, der dazu bestimmt ist, den Schaltkontakt (46) über die Führungsflächen (54, 56) zu bewegen,
und dass der Schaltkontakt (46) mit einer Rückholfeder (62) verbunden ist, welchem beim Schliessvorgangs der Unterbrechereinheit (14) derart spannbar ist, dass der Schaltkontakt (46) am Ende des Schliessvorgangs der Unterbrechereinheit (14) wieder zurück in die offene Position bewegbar ist wird.

## Claims

1. Gas-insulated, metal-encapsulated, high-voltage circuit breaker having an interrupter unit (14), a closing resistor (18) and a switch (15), which is connected in series with the closing resistor (18), for insertion of the closing resistor (18) in the circuit when on load, wherein the interrupter unit (14) has a moving, first interrupter contact (32), which is driven via a drive rod (34) and interacts with a second interrupter contact (33) in order to open and close the high-voltage circuit breaker, wherein the switch (15) has a movable switching contact (46), whose movement is mechanically coupled by means of a transmission (60) to the movement of the first interrupter contact (32), wherein the switching contact (46) is rotatably arranged about a rotation shaft (D) for insertion of the closing resistor (18), **characterized in that** the transmission (60) converts a linear movement of a drive rod (34) and/or of the first interrupter contact (32) in the direction of a first axis (A1) to a rotary movement of the switching contact (46) about the rotation shaft (D).

2. High-voltage circuit breaker according to Claim 1, **characterized in that** the rotation shaft (D) is mounted in the fixed position.

3. High-voltage circuit breaker according to Claim 1 or 2, **characterized in that** the switching contact (46) is mechanically coupled to the movement which drives this switching contact (46) only during a time period during the closing of the interrupter unit, wherein this time period is shorter than the duration of the movement for closing the interrupter unit (14).

4. High-voltage circuit breaker according to one of Claims 1 to 3, **characterized in that** the transmission (60) is a cam transmission, in particular a link control means.

5. High-voltage circuit breaker according to one of Claims 1 to 4, **characterized in that** the first interrupter contact (32) can move along an axis (A1), and the second interrupter contact (33) is arranged on this axis (A1), and **in that** this axis (A1) is fixed in position.

6. High-voltage circuit breaker according to one of Claims 1 to 5, **characterized in that** the switch (15) remains open during the opening of the interrupter unit (14).

7. High-voltage circuit breaker according to one of Claims 1 to 6, **characterized in that** a main current path (11) of the high-voltage circuit breaker can be interrupted by means of the interrupter unit (14), and a secondary current path (13) is routed in parallel with the main current path (11) and has the switch (15) and the closing resistor (18).

8. High-voltage circuit breaker according to one of Claims 1 to 7, **characterized in that** the rotation shaft (D) is at right angles to the axis (A1).

9. High-voltage circuit breaker according to one of Claims 1 to 8, **characterized in that** the transmission (60) is arranged in the same gas area as the switch (15) and/or the interrupter unit (14).

10. High-voltage circuit breaker according to one of Claims 1 to 9, **characterized in that** a lever ratio of a first lever (L1) to a second lever (L2) of the switching contact (46) is between 1 to 2 up to 1 to 7, preferably between 1 to 2.5 up to 1 to 6, and particularly preferably between 1 to 2.5 up to 1 to 4, wherein the first lever (L1) is defined by the point of action of the link control means (60) on the switching contact (46) and the rotation shaft (D), and the second lever (L2) is defined by the contact-making end area (50) and the rotation shaft (D).

11. High-voltage circuit breaker according to one of Claims 1 to 10, **characterized in that** the switch (15) and the interrupter unit (14) are arranged in a first housing part (12) of the high-voltage circuit breaker, and the closing resistor (18) is arranged in a second housing part (16) of the high-voltage circuit breaker, and the axis (A1) is a housing axis of the first housing part (12).

12. High-voltage circuit breaker according to one of Claims 1 to 11, **characterized in that** the link control means (60) has two branches (76', 76"), wherein the first branch (76') is passed through during the closing of the interrupter unit (14), and the second branch is passed through during the opening (76") of the interrupter unit (14).

13. High-voltage circuit breaker according to Claim 12, **characterized in that** the first branch (76') and the second branch (76") define a cam track (76) which is passed through continuously and which is closed.

14. High-voltage circuit breaker according to Claim 13, **characterized in that** the cam track (76) is restricted on both sides.

15. High-voltage circuit breaker according to Claim 12, **characterized in that** the first branch (76') and the second branch (76") each have a first end area and a second end area, wherein the first end area of the first branch (76') merges into the first end area of the second branch (76"), and the second end area of the first branch (76') is at a distance from the second end area of the second branch (76").

16. High-voltage circuit breaker according to one of Claims 1 to 15, **characterized in that** the movable switching contact (46) interacts with a counter contact (48) in order to close the switch (15), wherein the switching contact (46) and the counter contact (48) are each shielded by a shield (68, 68', 70) when the switch (15) is in the open position.

17. High-voltage circuit breaker according to Claim 16, **characterized in that** the shield (70') which is intended to shield the switching contact (46) can move and is directly coupled to the movement of the interrupter contact (32) or of the switching contact (46), or is coupled via a further link control means to the movement of the interrupter contact (32).

18. High-voltage circuit breaker according to Claim 1, **characterized in that** the switching contact (46) has a thickness of 0.5 mm to 10 mm.

19. High-voltage circuit breaker according to Claim 1, **characterized in that** the switching contact (46) is composed of aluminium.

20. High-voltage circuit breaker according to Claim 1, **characterized in that** the switching contact (46) has an operating end area (52) with two guide surfaces (54, 56) which merge into one another, and **in that** the transmission (60) has an actuator (58) which is coupled to the interrupter unit (14) which is intended to move the switching contact (46) over the guide surfaces (54, 56), and **in that** the switching contact (46) is connected to a return spring (62) which, during the closing process of the interrupter unit (14), can be stressed in such a way that the switching contact (46) can be moved back again to the open position at the end of the closing process of the interrupter unit (14).

## Revendications

1. Disjoncteur à haute tension sous enveloppe métallique et isolé par un gaz comportant une unité d'interruption (14), une résistance de fermeture (18) et un commutateur (15) connecté en série avec la résistance de fermeture (18) pour introduire la résistance de fermeture (18) dans le circuit de courant en charge, dans lequel l'unité d'interruption (14) comprend un premier contact d'interruption mobile (32) entraîné sur une tige d'entraînement (34), lequel contact d'interruption coopère avec un second contact d'interruption (33) pour ouvrir et fermer le disjoncteur à haute tension, dans lequel le commutateur (15) comprend un contact de commutation mobile (46) dont le mouvement est mécaniquement couplé au mouvement du premier contact d'interruption (32) au moyen d'un mécanisme de transmission (60),
dans lequel le contact de commutation (46) est disposé de façon à pouvoir tourner autour d'un axe de rotation (D) pour introduire la résistance de fermeture (18), **caractérisé en ce que** le mécanisme de transmission (60) convertit un mouvement linéaire d'une tige d'entraînement (34) et/ou du premier contact d'interruption (32) dans la direction d'un premier axe (A1) en un mouvement de rotation du contact de commutation (46) autour de l'axe de rotation (D).

2. Disjoncteur à haute tension selon la revendication 1, **caractérisé en ce que** l'axe de rotation (D) est monté de manière fixe.

3. Disjoncteur à haute tension selon la revendication 1 ou 2, **caractérisé en ce que** le couplage mécanique du contact de commutation (46) au mouvement d'entraînement dudit contact de commutation (46) s'effectue uniquement pendant un intervalle de temps au cours de la fermeture de l'unité d'interruption, dans lequel ledit intervalle de temps est inférieur à la durée du mouvement de fermeture de l'unité d'interruption (14).

4. Disjoncteur à haute tension selon l'une quelconque des revendications 1 à 3, **caractérisé en ce que** le mécanisme de transmission (60) est un mécanisme de transmission à cames, notamment une commande à coulisse.

5. Disjoncteur à haute tension selon l'une quelconque des revendications 1 à 4, **caractérisé en ce que** le premier contact d'interruption (32) est mobile le long d'un axe (A1) et **en ce que** le second contact d'interruption (33) est disposé sur ledit axe (A1) et **en ce que** ledit axe (A1) est fixe.

6. Disjoncteur à haute tension selon l'une quelconque des revendications 1 à 5, **caractérisé en ce que** le commutateur (15) reste ouvert pendant l'ouverture de l'unité d'interruption (14).

7. Disjoncteur à haute tension selon l'une quelconque des revendications 1 à 6, **caractérisé en ce qu'**un trajet de courant principal (11) du disjoncteur à haute tension peut être interrompu au moyen de l'unité d'interruption (14) et **en ce qu'**un trajet de courant de dérivation (13) est amené à passer en parallèle avec le trajet de courant principal (11), lequel trajet de courant de dérivation comprend le commutateur (15) et la résistance de fermeture (18).

8. Disjoncteur à haute tension selon l'une quelconque des revendications 1 à 7, **caractérisé en ce que** l'axe de rotation (D) est disposé à angle droit par rapport à l'axe (A1).

9. Disjoncteur à haute tension selon l'une quelconque des revendications 1 à 8, **caractérisé en ce que** le mécanisme de transmission (60) est disposé dans le même espace de gaz que le commutateur (15) et/ou que l'unité d'interruption (14).

10. Disjoncteur à haute tension selon l'une quelconque des revendications 1 à 9, **caractérisé en ce qu'**un rapport de bras de levier d'un premier bras de levier (L1) à un second bras de levier (L2) du contact de commutation (46) se situe entre 1 à 2 jusque à 1 à 7, de préférence entre 1 à 2,5 jusque à 1 à 6 et plus préférablement, entre 1 à 2,5 jusque à 1 à 4, dans lequel le premier bras de levier (L1) est défini par le point d'application de la commande à coulisse (60) sur le contact de commutation (46) et l'axe de rotation (D), et dans lequel le second bras de levier (L2) est défini par la région d'extrémité de mise en contact (50) et l'axe de rotation (D).

11. Disjoncteur à haute tension selon l'une quelconque des revendications 1 à 10, **caractérisé en ce que** le commutateur (15) et l'unité d'interruption (14) sont disposés dans une première partie de boîtier (12) du disjoncteur à haute tension et **en ce que** la résistance de fermeture (18) est disposée dans une seconde partie de boîtier (16) du disjoncteur à haute tension et **en ce que** l'axe (A1) est un axe de boîtier de la première partie de boîtier (12).

12. Disjoncteur à haute tension selon l'une quelconque des revendications 1 à 11, **caractérisé en ce que** la commande à coulisse (60) comprend deux branches (76', 76"), dans lequel la première branche (76') est parcourue lors de la fermeture de l'unité d'interruption (14) et **en ce que** la seconde branche est parcourue lors de l'ouverture (76") de l'unité d'interruption (14).

13. Disjoncteur à haute tension selon la revendication 12, **caractérisé en ce que** la première branche (76') et la seconde branche (76") définissent une trajectoire courbe (76) parcourue en continu, qui est fermée.

14. Disjoncteur à haute tension selon la revendication 13, **caractérisé en ce que** la trajectoire courbe (76) est délimitée des deux côtés.

15. Disjoncteur à haute tension selon la revendication 12, **caractérisé en ce que** la première branche (76') et la seconde branche (76") comprennent chacune une première région d'extrémité et une seconde région d'extrémité, dans lequel la première région d'extrémité de la première branche (76') est superposée à la première région d'extrémité de la seconde branche (76") et **en ce que** la seconde région d'extrémité de la première branche (76') est espacée de la seconde région d'extrémité de la seconde branche (76").

16. Disjoncteur à haute tension selon l'une quelconque des revendications 1 à 15, **caractérisé en ce que** le contact de commutation mobile (46) coopère avec un contre-contact (48) pour fermer le commutateur (15), dans lequel le contact de commutation (46) ainsi que le contre-contact (48) sont respectivement blindés par un blindage (68, 68', 70) à la position ouverte du commutateur (15).

17. Disjoncteur à haute tension selon la revendication 16, **caractérisé en ce que** le blindage (70') établi pour blinder le contact de commutation (46) est réalisé de manière mobile et est directement couplé au mouvement du contact d'interruption (32) ou du contact de commutation (46) ou est couplé au mouvement du contact d'interruption (32) par l'intermédiaire d'une autre commande à coulisse.

18. Disjoncteur à haute tension selon la revendication 1, **caractérisé en ce que** le contact de commutation (46) présente une épaisseur de 0,5 mm à 10 mm.

19. Disjoncteur à haute tension selon la revendication 1, **caractérisé en ce que** le contact de commutation (46) est constitué d'aluminium.

20. Disjoncteur à haute tension selon la revendication 1, **caractérisé en ce que** le contact de commutation (46) comprend une région d'extrémité d'actionnement (52) comportant deux surfaces de guidage (54, 56) passant l'une dans l'autre,
et **en ce que** le mécanisme de transmission (60) comprend un actionneur (58) couplé à l'unité d'interruption (14), lequel actionneur est conçu pour déplacer le contact de commutation (46) sur les surfaces de guidage (54, 56),
et **en ce que** le contact de commutation (46) est relié à un ressort de rappel (62) qui peut être soumis à une tension telle que, lors du processus de fermeture de l'unité d'interruption (14), le contact de commutation (46) puisse être ramené à la position ouverte à la fin du processus de fermeture de l'unité d'interruption (14).
